# EUROPÄISCHE PATENTANMELDUNG

(11) **EP 3 335 932 A2**
(43) Veröffentlichungstag der Anmeldung: **20.06.2018**
(21) Anmeldenummer: 17197243.3
(22) Anmeldetag: 19.10.2017
(51) Int. Cl.: B60N 3/10, B60N 2/75, B60N 2/58, B60N 2/70

(54) **SCHWENKBARE LEHNENANORDNUNG UND VERFAHREN ZU IHRER HERSTELLUNG**

(30) Priorität: 14.12.2016 DE 102016224997
(71) Anmelder: BOS GmbH & Co. KG, 73760 Ostfildern (DE)
(72) Erfinder: Boddenberg, Jan, 50674 Köln (DE); Bohlke, Hartmut, 42369 Wuppertal (DE); Göbbels, Andreas, 51515 Kürten (DE); Pink, Tanja, 42285 Wuppertal (DE); Sitzler, Wolfgang, 42111 Wuppertal (DE); Tutelea, Bogdan, 42799 Leichlingen (DE)
(74) Vertreter: Patentanwälte Ruff, Wilhelm, Beier, Dauster & Partner mbB

(57) **Zusammenfassung**

1. Schwenkbare Lehnenanordnung für einen Fahrzeuginnenraum und Verfahren zu ihrer Herstellung.
2.1 Eine derartige Lehnenanordnung mit einem Lehnenkörper, der einen Bezug (5) sowie eine Aufnahme (4) für eine Gehäuseschale (7) aufweist, die zur Halterung wenigstens eines Trinkbehältnisses ausgestaltet ist, wobei die Gehäuseschale einen umlaufenden Kragen (8) aufweist, ist bekannt.
2.2 Erfindungsgemäß überdeckt der Kragen in montiertem Zustand den Bezug im Bereich eines Randes der Aufnahme, und der Kragen ist form-, stoff- oder kraftschlüssig mit dem Bezug verbunden.
2.3 Einsatz für eine Fondsitzbank eines Personenkraftwagens.

## Beschreibung

Die Erfindung betrifft eine schwenkbare Lehnenanordnung für einen Fahrzeuginnenraum mit einem Lehnenkörper, der einen Bezug sowie eine Aufnahme für eine Gehäuseschale aufweist, die zur Halterung wenigstens eines Trinkbehältnisses ausgestaltet ist, wobei die Gehäuseschale einen umlaufenden Kragen aufweist. Die Erfindung betrifft zudem ein Verfahren zum Herstellen einer solchen Lehnenanordnung.

Aus der DE 10 2013 204 000 A1 ist eine schwenkbare Lehnenanordnung für einen Fahrzeuginnenraum eines Personenkraftwagens bekannt. Die Lehnenanordnung ist Teil einer Rückenlehne einer Fondsitzbank des Personenkraftwagens. Die Lehnenanordnung weist einen Lehnenkörper auf, der mit einer Polsterung in Form eines Schaumkörpers versehen ist. Der Lehnenkörper ist durch eine formstabile Rahmenstruktur stabilisiert, die mittels einer Schwenklagerung fahrzeugseitig schwenkbeweglich im Bereich der Rückenlehnenanordnung gelagert ist. Der Lehnenkörper ist mit einer Aufnahme versehen, in die eine Gehäuseschale eingesetzt ist, die zur Aufnahme wenigstens eines Trinkbehältnisses vorgesehen ist. Die Gehäuseschale weist eine Deckblende auf, die im Bereich einer Oberseite des Lehnenkörpers vorgesehen ist, bezogen auf eine etwa horizontal nach vorne geschwenkte Armlehnstellung des Lehnenkörpers. Die Gehäuseschale weist einen Bodenbereich auf, der gegenüber einer Lehnfläche des Lehnenkörpers, die gegenüberliegend zu der Deckblende im Bereich einer Unterseite vorgesehen ist, elastisch ausweichend gehalten ist.

Aufgabe der Erfindung ist es, eine schwenkbare Lehnenanordnung und ein Verfahren zu ihrer Herstellung der jeweils eingangs genannten Art zu schaffen, die eine optisch ansprechende, kostengünstige und kompakte Gestaltung ermöglichen.

Diese Aufgabe wird für die schwenkbare Lehnenanordnung dadurch gelöst, dass der Kragen in montiertem Zustand den Bezug im Bereich eines Randes der Aufnahme überdeckt, und dass der Kragen form-, stoff- oder kraftschlüssig mit dem Bezug verbunden ist. Durch die erfindungsgemäße Lösung ist sichergestellt, dass der Bezug im Bereich der Oberseite des Lehnenkörpers, in dem der Kragen positioniert ist, keine Falten wirft und fest mit dem Kragen verbunden ist. Die Gehäuseschale selbst ist fest in der Aufnahme des Lehnenkörpers gehalten, wodurch eine sichere Verbindung zwischen der Gehäuseschale und dem Lehnenkörper erzielt wird. Die erfindungsgemäße Lösung eignet sich in besonders vorteilhafter Weise für eine Lehnenanordnung in Form einer Mittelarmlehne, die im Bereich einer Fondsitzbank schwenkbeweglich fahrzeugseitig gelagert ist. Die Fondsitzbank ist Teil eines Fahrzeuginnenraumes eines Personenkraftwagens. Die erfindungsgemäße Lehnenanordnung ist vorteilhaft zwischen einer hochgeschwenkten Ruhestellung, in der die Lehnenanordnung in eine Rückenlehne der Fondsitzbank integriert ist, und einer nach vorne und nach unten verschwenkten Funktionsstellung schwenkbeweglich gelagert, in der eine offene Seite der Aufnahme des Lehnenkörpers nach oben ausgerichtet ist, so dass der Kragen der Gehäuseschale im Bereich der Oberseite des Lehnenkörpers positioniert ist. Diese Schwenkstellung bildet eine Armlehnstellung, in der eine auf der Fondsitzbank sitzende Person ihren Arm auf der Oberseite des Lehnenkörpers abstützen kann. Dadurch, dass die Gehäuseschale in dieser Armlehnstellung des Lehnenkörpers nach oben offen und demzufolge von oben zugänglich ist, ist es zudem möglich, in der Gehäuseschale wenigstens ein Trinkbehältnis abzustellen. Die Gehäuseschale ist einschließlich des Kragens vorzugsweise aus einem thermoplastischen Kunststoffmaterial hergestellt.

In Ausgestaltung der Erfindung ist der Lehnenkörper als Schaumkörper gestaltet. Der Schaumkörper ist aus einem elastisch nachgiebigen Kunststoffschaummaterial hergestellt mit hoher Porendichte. In dem Schaumkörper ist die Aufnahme für die Gehäuseschale ausgeformt. Der Schaumkörper dient in einer Lehnstellung des Lehnenkörpers als Polsterung, um eine Polsterungsfunktion der Rückenlehnenanordnung auch im Bereich der schwenkbaren Lehnenanordnung fortzusetzen.

In weiterer Ausgestaltung der Erfindung ist ein Tragrahmen vorgesehen, den der Lehnenkörper umgibt, und dem eine Schwenklagerung zugeordnet ist, die mit fahrzeugseitigen Schwenkaufnahmen verbindbar ist. Der Tragrahmen ist aus Metall hergestellt und weist vorzugsweise Längs- und Querträger auf, die mit einer Schwenkachse verbunden sind. Die Schwenkachse ist vorzugsweise mit Lagerbolzenabschnitten versehen, die die Schwenklagerung der Lehnenanordnung bilden.

In weiterer Ausgestaltung der Erfindung ist an einer Außenseite der Gehäuseschale wenigstens eine Rastklammer einstückig angeformt, die mit einem Gegenabschnitt des Tragrahmens formschlüssig verbindbar ist. Vorzugsweise sind zwei Rastklammern an gegenüberliegenden Stirnseiten der Gehäuseschale angeformt, die von einer Außenwandung der Gehäuseschale nach außen abragen. Die Rastklammern sind vorzugsweise als Omega-Klammern gestaltet, die einen im Wesentlichen Ω-förmigen Querschnitt aufweisen, der zu einer Unterseite hin offen ist. Die wenigstens eine Rastklammer kann von oben auf einen Querträger des Tragrahmens aufgesteckt und aufgerastet werden, wobei ein Querschnitt des Querträgers vorzugsweise komplementär zu einem freien Querschnitt der Rastklammer gestaltet ist. Die wenigstens eine Rastklammer ist in vorteilhafter Weise derart ausgeführt, dass sie von dem Gegenabschnitt des Trägerrahmens, insbesondere von dem Querträger, nach einem Aufrasten auch wieder gelöst werden kann.

In weiterer Ausgestaltung der Erfindung ist der Kragen im Bereich seiner Unterseite mit nach unten abragenden Steckstiften versehen, die den Bezug im Bereich des Randes der Aufnahme durchdringen, und die formschlüssig in den Schaumkörper eintauchen. Dadurch wird zum einen eine Spannung des Bezugs auf dem Schaumkörper erzielt. Zum anderen werden sowohl der Bezug als auch der Kragen relativ zum Schaumkörper fixiert. Die Steckstifte haben demzufolge eine Doppelfunktion, da sie zum einen den Bezug im Bereich eines Randes der Aufnahme des Schaumkörpers sichern, und da sie zum anderen eine Positionssicherung des Kragens und damit vorzugsweise auch der Gehäuseschale relativ zum Schaumkörper gewährleisten.

In weiterer Ausgestaltung der Erfindung sind die Steckstifte einstückig an dem Kragen angeformt. Bei dieser Ausgestaltung werden die Steckstifte gemeinsam mit dem Kragen der Gehäuseschale hergestellt, indem sie insbesondere in einem einstufigen Spritzgussvorgang aus demselben Kunststoffmaterial hergestellt werden wie der Kragen. In dem Spritzgussvorgang werden die Steckstifte am Kragen einstückig angeformt, vorzugsweise bei gleichzeitiger Herstellung der Gehäuseschale, sofern diese den Kragen einstückig umfasst.

In weiterer Ausgestaltung der Erfindung ist der Schaumkörper im Bereich des Randes der Aufnahme mit einem in dem Schaumkörper gehaltenen, umlaufenden Spannrahmen versehen, der von dem Bezug überdeckt ist, und der Kragen der Gehäuseschale ist mit dem Spannrahmen verbunden und überdeckt den Bezug im Bereich des Randes der Aufnahme. Der Spannrahmen gewährleistet, dass die Gehäuseschale in montiertem Zustand in der Aufnahme des Schaumkörpers gesichert ist. Zudem ist der Bezug mit einem Randbereich einer die Aufnahme umschließenden Aussparung des Bezugs sandwichartig zwischen dem Kragen und dem Spannrahmen gehalten.

In weiterer Ausgestaltung der Erfindung ist der Bezug zwischen dem Kragen und dem Spannrahmen eingeklemmt. Hierdurch wird eine kraftschlüssige Sicherung des Randbereichs der Aussparung des Bezuges im Bereich der Aufnahme erzielt.

In weiterer Ausgestaltung der Erfindung weist der Spannrahmen Durchtritte für Steckstifte des Kragens auf, und die Steckstifte durchdringen den zwischen dem Spannrahmen und dem Kragen befindlichen Bezug. Der zwischen dem Spannrahmen und dem Kragen befindliche Bezug definiert einen umlaufenden Randbereich einer Aussparung des Bezugs, die auf eine Grundfläche der Aufnahme des Schaumkörpers abgestimmt ist.

In weiterer Ausgestaltung der Erfindung ist der Spannrahmen mit Montagekrallen versehen, die jeweils mittels eines Filmscharniers an dem Spannrahmen einstückig angeformt und zwischen einer von dem Spannrahmen zu einer Mitte hin abragenden Ausgangsstellung und einer in eine Wandung der Aufnahme des Schaumkörpers verkrallten Funktionsstellung schwenkbar angeordnet ist. Als Filmscharnier ist ein Festkörpergelenk jeglicher Art anzusehen. Die Ausgestaltung ermöglicht eine zwangsläufige Verankerung der Montagekrallen des Spannrahmens in der Wandung der Aufnahme des Schaumkörpers, sobald die Gehäuseschale von oben her in den Spannrahmen eingesetzt wird.

In weiterer Ausgestaltung der Erfindung ist die Gehäuseschale mit Rast- und/oder Steckprofilierungen versehen, die mit komplementären Rast- und/oder Steckprofilierungen der Montagekrallen und/oder des Spannrahmens zusammenwirken, um die Gehäuseschale in ihrem in die Aufnahme des Schaumkörpers eingesetzten Zustand zu fixieren.

In weiterer Ausgestaltung der Erfindung ist die Gehäuseschale in ein den Kragen aufweisendes Gehäuseoberteil und in ein Gehäuseunterteil unterteilt, wobei das Gehäuseunterteil in den Schaumkörper eingebettet ist und das Gehäuseoberteil mit dem Bezug verbunden ist, indem der Kragen umlaufend mit einem Rand des Bezugs im Bereich einer Aussparung des Bezugs für die Aufnahme verbunden ist. Das Gehäuseunterteil ist in der Aufnahme des Schaumkörpers fixiert. Das Gehäuseoberteil ist fest mit dem Bezug verbunden, so dass bei einem Aufziehen des Bezugs auf den Schaumkörper durch eine Verbindung des Gehäuseoberteils mit dem Gehäuseunterteil zwangsläufig eine Sicherung und Spannung des Bezugs erzielbar ist.

In weiterer Ausgestaltung der Erfindung sind das Gehäuseoberteil und das Gehäuseunterteil insbesondere durch Verklebung stoffschlüssig miteinander verbunden. Statt einer Verklebung kann eine stoffschlüssige Verbindung auch durch eine Verschweißung, insbesondere eine Ultraschallverschweißung, erzielt werden.

Für das Verfahren der eingangs genannten Art, bei dem ein Schaumkörper mit einer Aufnahme für eine Gehäuseschale versehen wird, und bei dem der Schaumkörper mit einem Bezug versehen wird, wird die der Erfindung zugrunde liegende Aufgabe dadurch gelöst, dass ein Kragen der Gehäuseschale mit dem Bezug in einem Randbereich der Aufnahme verbunden wird. Zudem wird mit dem erfindungsgemäßen Verfahren eine Fixierung der Gehäuseschale in der Aufnahme erzielt, insbesondere durch Kraftschluss oder durch Stoffschluss, vorzugsweise in Form einer Verklebung.

In Ausgestaltung des Verfahrens werden an dem Kragen Steckstifte angeformt, die bei einem Einsetzen der Gehäuseschale in die Aufnahme den Bezug durchdringen und in den Schaumkörper eintauchen. Die Steckstifte durchdringen den Randbereich der Aussparung des Bezugs im Bereich der Aufnahme.

In weiterer Ausgestaltung der Erfindung wird im Bereich der Aufnahme in den Schaumkörper ein Spannrahmen eingeformt, und der Kragen der Gehäuseschale wird bei einem Einsetzen der Gehäuseschale in die Aufnahme mit dem Spannrahmen verbunden unter Zwischenfügung eines umlaufenden Randes des Bezugs. Dadurch ergibt sich beim Einsetzen der Gehäuseschale eine zwangsläufige Verbindung mit dem Randbereich der Aussparung des Bezugs. Der Spannrahmen wird vorzugsweise in ein Kunststoffschaumwerkzeug eingelegt, in dem der Schaumkörper hergestellt wird, so dass sich bei einem Schäumen des Schaumkörpers zwangsläufig die Einformung des Spannrahmens ergibt.

In weiterer Ausgestaltung der Erfindung werden an den Spannrahmen Montagekrallen angeformt, die in einem Ausgangszustand frei zu einer Mitte der Aufnahme hin abragen, und die bei einem Einsetzen der Gehäuseschale in die Aufnahme nach unten und nach außen gedrückt werden, wodurch die Montagekrallen in Wandungen der Aufnahme des Schaumkörpers eindringen. Dies ermöglicht eine besonders einfache Herstellung der Lehnenanordnung, da mit dem Einsetzen der Gehäuseschale von oben zwangsläufig zum einen die Sicherung der Gehäuseschale relativ zum Spannrahmen und zum anderen die Fixierung und Spannung des Randbereichs des Bezugs zwischen dem Kragen der Gehäuseschale und dem Spannrahmen erreicht werden.

In weiterer Ausgestaltung des Verfahrens verrastet die Gehäuseschale außenseitig mit den Montagekrallen, sobald die Gehäuseschale ihre in die Aufnahme eingesetzte Funktionsstellung erreicht hat. Alternativ oder ergänzend zu einer Verrastung der Gehäuseschale mit den Montagekrallen ist vorzugsweise auch eine Verrastung der Gehäuseschale mit dem Spannrahmen vorgesehen.

In weiterer Ausgestaltung der Erfindung wird die Gehäuseschale als zwei separate Bauteile in Form eines den Kragen aufweisenden Gehäuseoberteils und in Form eines wannenförmigen Gehäuseunterteils hergestellt, anschließend wird das Gehäuseunterteil in die Aufnahme des Schaumkörpers eingebettet, das Gehäuseoberteil wird mit dem Bezug verbunden, und der Bezug wird auf den Schaumkörper aufgezogen, wobei das Gehäuseoberteil im Bereich der Aufnahme mit einem oberen Rand des Gehäuseunterteils verbunden wird. Die Verbindung des Gehäuseoberteils mit einem oberen Rand des Gehäuseunterteils erfolgt vorzugsweise durch Verklebung. Das Gehäuseoberteil und das Gehäuseunterteil schließen entweder auf Stoß aneinander an oder sie überlappen einander. Die jeweilige Kontaktfläche wird mit einem geeigneten Klebstofffilm versehen, wodurch sich die gewünschte Verklebung ergibt. Das Gehäuseoberteil wird mit dem Randbereich des Bezugs um die Aussparung des Bezugs herum verbunden.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in einer Explosionsdarstellung eine erste Ausführungsform einer erfindungsgemäßen, schwenkbaren Lehnenanordnung,
- Fig. 2: in perspektivischer Darstellung einen Teilbereich der Lehnenanordnung nach Fig. 1 ohne Lehnenkörper und Bezug,
- Fig. 3: einen Längsschnitt durch die Lehnenanordnung nach Fig. 1,
- Fig. 4: einen vergrößerten Ausschnitt IV der Darstellung nach Fig. 3,
- Fig. 5: einen Querschnitt durch die Lehnenanordnung nach den Fig. 1 bis 3,
- Fig. 6: einen vergrößerten Ausschnitt VI der Darstellung nach Fig. 5,
- Fig. 7: eine weitere Ausführungsform einer erfindungsgemäßen, schwenkbaren Lehnenanordnung in einer Explosionsdarstellung,
- Fig. 8a bis 8c: schematisch in einem Ausschnitt verschiedene Montageschritte der Lehnenanordnung nach Fig. 7,
- Fig. 9: eine weitere Ausführungsform einer erfindungsgemäßen, schwenkbaren Lehnenanordnung in einer Explosionsdarstellung,
- Fig. 10: in perspektivischer Darstellung schräg von unten einen Spannrahmen und eine Gehäuseschale der Lehnenanordnung nach Fig. 9,
- Fig. 11: in einer Explosionsdarstellung einen Bezug und einen Lehnenkörper gemäß einer weiteren Ausführungsform einer erfindungsgemäßen, schwenkbaren Lehnenanordnung und
- Fig. 12: in vollständiger Explosionsdarstellung die Lehnenanordnung nach Fig. 11.

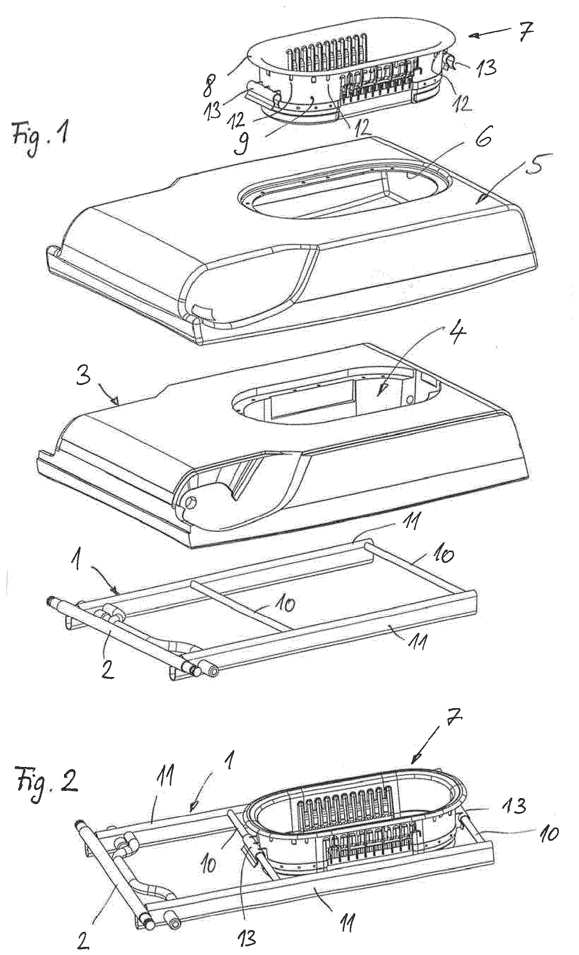

Ein Personenkraftwagen weist, wie anhand der Fig. 1 und 2 in der DE 10 2013 204 000 A1 dargestellt, in einem Fahrzeuginnenraum eine Fondsitzbank auf, die im Bereich einer Fahrzeugmitte mit einer schwenkbaren Lehnenanordnung versehen ist. Die anhand der Fig. 1 bis 12 dargestellten und nachfolgend näher beschriebenen Lehnenanordnungen sind alternativ zu der Lehnenanordnung gemäß der DE 10 2013 204 000 A1 in eine entsprechende Aussparung einer Rückenlehnenanordnung der Fondsitzbank einsetzbar und zwischen einer in die Aussparung der Rückenlehnenanordnung versenkten Lehnstellung und einer nach vorne und nach unten etwa horizontal ausgerichteten Funktionsstellung verschwenkbar gelagert ist. In montiertem Zustand der erfindungsgemäßen Lehnenanordnung gemäß einer der Ausführungsformen nach den Fig. 1 bis 12 im Bereich der Rückenlehnenanordnung der Fondsitzbank ist die entsprechende Lehnenanordnung fahrzeugfest gehalten, wobei sich eine Schwenkachse der Lehnenanordnung in Fahrzeugquerrichtung erstreckt. Die Schwenkachse wird bei allen Ausführungsformen gemäß den Fig. 1 bis 12 durch einen Querträger 2, 2a, 2b, 2c eines Tragrahmens 1, 1a, 1b, 1c gebildet, der an seinen gegenüberliegenden Stirnenden mit Schwenklagerbolzen versehen ist, die nicht näher bezeichnet sind und auch als Lagerbolzenabschnitte bezeichnet werden. Die Schwenklagerbolzen wirken mit entsprechenden, fahrzeugfesten Gegenlagern im Bereich der Fondsitzbank zusammen, sobald die Lehnenanordnung fahrzeugseitig montiert ist. Der Tragrahmen 1, 1a, 1b, 1c jeder Lehnenanordnung gemäß den Fig. 1 bis 12 weist jeweils zwei parallel zueinander beabstandete Längsträger 11 auf, die über den die jeweilige Schwenkachse 2, 2a, 2b, 2c bildenden Querträger miteinander verbunden sind. Der Tragrahmen besteht aus Metall.

Allen Ausführungsformen gemäß den Fig. 1 bis 12 ist zudem gemein, dass neben einem Tragrahmen 1, 1a, 1b, 1c und einer dem Tragrahmen 1, 1a, 1b, 1c zugeordneten Schwenkachse 2, 2a, 2b, 2c jeweils ein Lehnenkörper in Form eines Schaumkörpers 3, 3a, 3b, 3c sowie ein Bezug 5, 5a, 5b, 5c aus einem textilen, flexiblen Flächenmaterial vorgesehen ist. In jedem Schaumkörper 3, 3a, 3b, 3c ist zudem eine Aufnahme 4, 4a, 4b, 4c integriert, in die eine ein- oder mehrteilige Gehäuseschale 7, 7a, 7b, 7c einsetzbar ist, die zur Aufnahme und Halterung von ein oder zwei Trinkbehältnissen dient. Die jeweilige Gehäuseschale 7, 7a, 7b, 7c besteht aus einem thermoplastischen Kunststoff und ist vorzugsweise in einem Spritzgussverfahren hergestellt. Der jeweilige Schaumkörper 3, 3a, 3b, 3c ist einstückig aus einem elastisch nachgiebigen Kunststoffschaummaterial hergestellt, das elastisch nachgiebige Polsterungsfunktionen insbesondere in der Lehnstellung der Lehnenanordnung erfüllt. Bei allen Ausführungsformen ist der jeweilige Tragrahmen 1, 1a, 1b, 1c in dem Schaumkörper 3 integriert. Dies wird durch Einbringen des Tragrahmens 1, 1a, 1b, 1c in die Werkzeugform zur Herstellung des Schaumkörpers 3, 3a, 3b, 3c erzielt. Die jeweilige Schwenkachse 2, 2a, 2b, 2c wird von dem Schaumkörper 3 so umschäumt, dass die gegenüberliegenden Schwenklagerbolzen zu gegenüberliegenden Seiten aus dem Schaumkörper 3 herausragen.

Der Bezug 5, 5a, 5b, 5c ist auf die dreidimensionale, geometrische Form des Schaumkörpers 3 abgestimmt und wird auf den Schaumkörper 3 aufgezogen und auf diesem fixiert.

Allen Ausführungsformen ist zudem gemeinsam, dass die jeweilige Gehäuseschale 7, 7a, 7b, 7c sowohl in der jeweiligen Aufnahme 4, 4a, 4b, 4c des jeweiligen Schaumkörpers 3, 3a, 3b, 3c fixiert, d. h. positionsgesichert, als auch mit dem jeweiligen Bezug 5, 5a, 5b, 5c fest verbunden ist unter Spannung des Bezugs 5, 5a bis 5c in einem Randbereich einer Aussparung 6, 6a, 6b, 6c des Bezugs 5, wobei der Randbereich ringförmig umlaufend gestaltet ist. Die Aussparung 6, 6a, 6b, 6c ist auf eine Randkontur der jeweiligen Aufnahme 4, 4a, 4b, 4c des Schaumkörpers 3, 3a, 3b, 3c im Bereich ihrer Oberseite abgestimmt. Jede Gehäuseschale 7, 7a, 7b, 7c weist zudem im Bereich ihrer Oberseite einen umlaufenden Kragen 8, 8a, 8b, 8c auf, der in montiertem Zustand der Gehäuseschale 7, 7a, 7b, 7c von einer Oberseite her auf dem Randbereich der Aussparung 6, 6a bis 6c des Bezugs 5, 5a bis 5c positioniert ist und diesen gegen die Randkontur der Aufnahme 4, 4a, 4b, 4c des Schaumkörpers 3, 3a, 3b, 3c drückt.

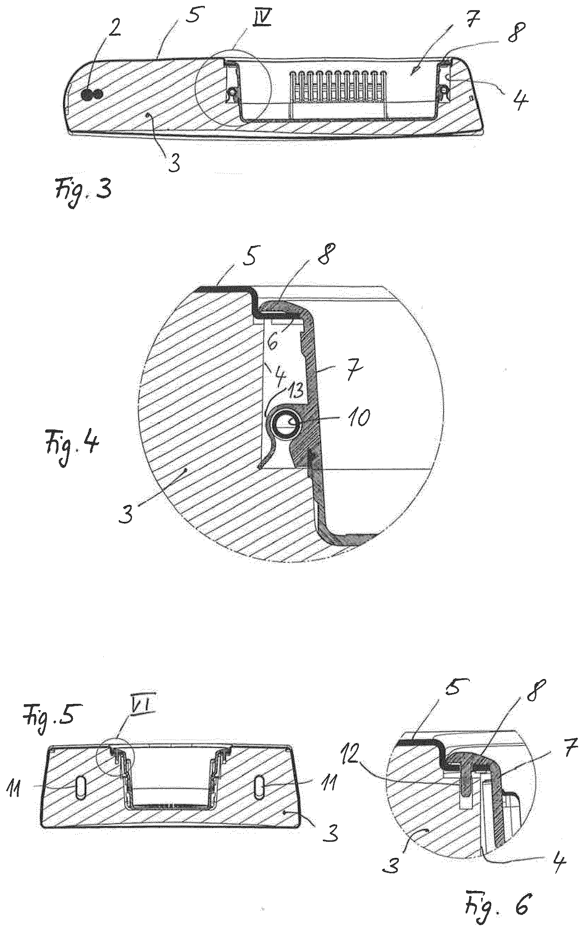

Nachfolgend werden die verschiedenen Ausführungsformen gemäß den Fig. 1 bis 12 detailliert beschrieben:
Die schwenkbare Lehnenanordnung gemäß den Fig. 1 bis 6 weist einen Tragrahmen 1 auf, bei dem die beiden Längsträger 11 durch zwei zueinander parallel beabstandete Querträger 10 miteinander verbunden sind. Der eine Querträger 10 ist an einem zu der Schwenkachse 2 gegenüberliegenden Stirnendbereich der Längsträger 11 positioniert und fest mit den Längsträgern 11 verbunden. Der andere Längsträger 10 ist in einem Abstand zu dem stirnseitigen Längsträger 10 positioniert und fest mit den Längsträgern 11 verbunden, der zumindest weitgehend einer Länge der Gehäuseschale 7 entspricht. Beide Querträger 10 sind zylindrisch ausgeführt. Die Gehäuseschale 7 weist in Abstand unterhalb des Kragens 8 auf gegenüberliegenden Stirnseiten jeweils eine Rastklammer 13 auf, die als Omega-Klammern gestaltet sind. Die Rastklammern 13 sind einstückig außenseitig an den Stirnseiten einer umlaufenden Wandung der Gehäuseschale 7 angeformt. Die Rastklammern 13 weisen einen Rohr- oder Nutquerschnitt auf, der sich in Querrichtung des Trägerrahmens 1 erstreckt, und der jeweils nach unten offen ist. Beide Rastklammern 13 definieren einen Omega-förmigen Querschnitt. Beide Rastklammern 13 sind dazu vorgesehen, gemeinsam mit der Gehäuseschale 7 auf den beiden Querträgern 10 des Tragrahmens 1 verrastet zu werden (Fig. 2 und 4).

Der Kragen 8 der Gehäuseschale 7 ragt seitlich nach außen von einem oberen Rand der umlaufenden Wandung der Gehäuseschale 7 nach außen ab und ist einstückig mit der Wandung ausgeführt. Von einer Unterseite des Kragens 8 ragen mehrere, über den Umfang des Kragens 8 verteilt angeordnete Steckstifte 12 nach unten ab, die beim Einsetzen der Gehäuseschale 7 entsprechende Löcher in dem Randbereich der Aussparung 6 des Bezugs 5 durchdringen und in eine obere Ringschulter der Randkontur der Aufnahme 4 des Schaumkörpers 3 eingedrückt werden. Dadurch wird zwangsläufig beim Einsetzen der Gehäuseschale 7 in die Aufnahme 4 des Schaumkörpers 3 der Randbereich der Aussparung 6 des Bezuges 5 mit nach unten gezogen und gegen die Ringschulter des Randbereiches der Aufnahme 4 gedrückt. Hierdurch wird der Bezug 5 gespannt und relativ zur Aufnahme 4 fixiert. Ergänzend rasten die Rastklammern 13 auf den Querträgern 10 auf, wodurch die Gehäuseschale 7 relativ zum Tragrahmen 1 und damit auch relativ zum Schaumkörper 3 fixiert ist. Die Lehnenanordnung nach den Fig. 1 bis 6 ist demzufolge werkzeuglos montierbar unter Fixierung der Gehäuseschale 7 im Schaumkörper 3 und unter gleichzeitiger Spannung und Klemmung des Bezugs 5, insbesondere im Randbereich der Aussparung 6 relativ zum Schaumkörper 3.

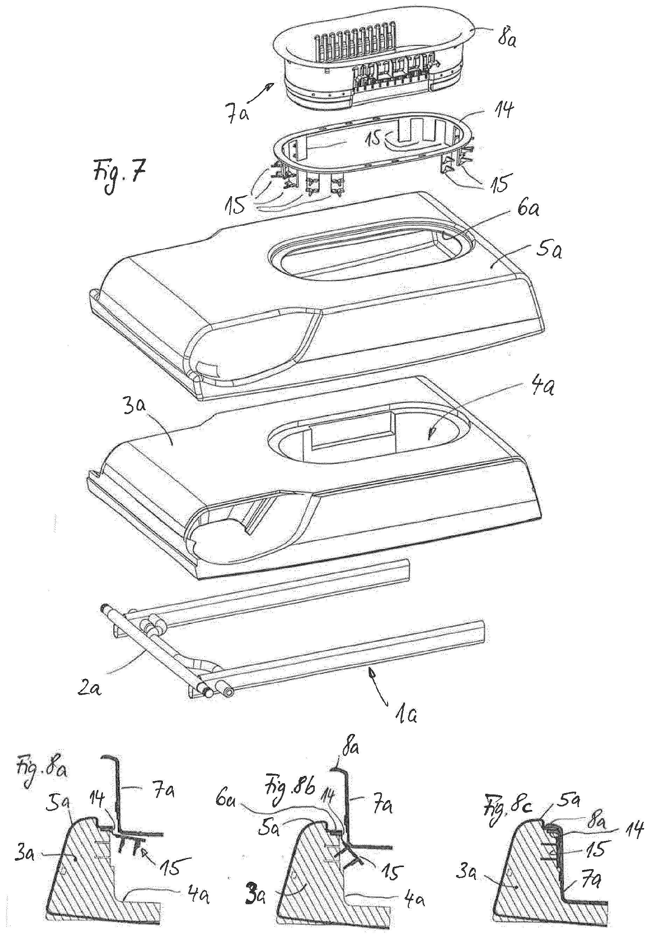

Bei der Ausführungsform einer schwenkbaren Lehnenanordnung gemäß den Fig. 7 und 8a bis 8c wird die Gehäuseschale 7a relativ zu einem Spannrahmen 14 fixiert, der im Bereich der Ringschulter der Randkontur der Aufnahme 4a des Schaumkörpers 3a positioniert und bei der Herstellung des Schaumkörpers 3a mit eingeformt wird. Der Spannrahmen 14 ist nach Art eines Ovals ringförmig gestaltet und weist mehrere, über seinen Umfang verteilt angeordnete Montagekrallen 15 auf, die vor dem Einsetzen der Gehäuseschale 7a etwa horizontal zu einer Mitte der Aufnahme 4 hin abragen (siehe Fig. 8a). Die jeweilige Montagekralle 15 ist einstückig an dem aus einem thermoplastischen Kunststoff hergestellten Spannrahmen 14 angeformt, wobei die jeweilige Montagekralle 15 mittels eines Filmscharniers mit dem Spannrahmen 14 verbunden ist. Das Filmscharnier definiert ein Schwenkgelenk für die jeweilige Montagekralle 15. Die Montagekralle 15 weist nach unten bzw. nach außen ragende Krallzapfen auf, die sich bei einem Verschwenken der jeweiligen Montagekralle aus ihrer horizontalen Ausgangsstellung nach unten zwangsläufig in eine Wandung der Aufnahme 4a des Schaumkörpers 3a hineindrücken (siehe Fig. 8b und 8c). Anhand der Fig. 8a bis 8c ist erkennbar, dass der Randbereich der Aussparung 6a des Bezugs 5a oberhalb des Spannrahmens 14 positioniert ist, bevor die Gehäuseschale 7a von oben her in die Aufnahme 4a eingesetzt wird. Beim Einsetzen der Gehäuseschale 7a in die Aufnahme 4a drückt zwangsläufig ein Boden der Gehäuseschale 7a die Montagekrallen 15 nach unten und nach außen in die Wandung der Aufnahme 4a hinein. Zusätzlich drückt eine Unterseite des Kragens 8a der Gehäuseschale 7a den Randbereich des Bezugs 5a von oben her auf den Spannrahmen 14, wodurch sich eine Klemmung des Randbereichs des Bezugs 5a ergibt. Die Gehäuseschale 7a ist ergänzend im Bereich ihrer Außenseite mit Rastprofilierungen versehen, die die Gehäuseschale 7a relativ zu den Montagekrallen 15 und relativ zum Spannrahmen 14 in der eingesetzten Endstellung sichern. Dadurch ist gewährleistet, dass die Gehäuseschale 7a sich in einem Fahrbetrieb des Personenkraftwagens nicht wieder aus der Aufnahme 4a nach oben lösen kann.

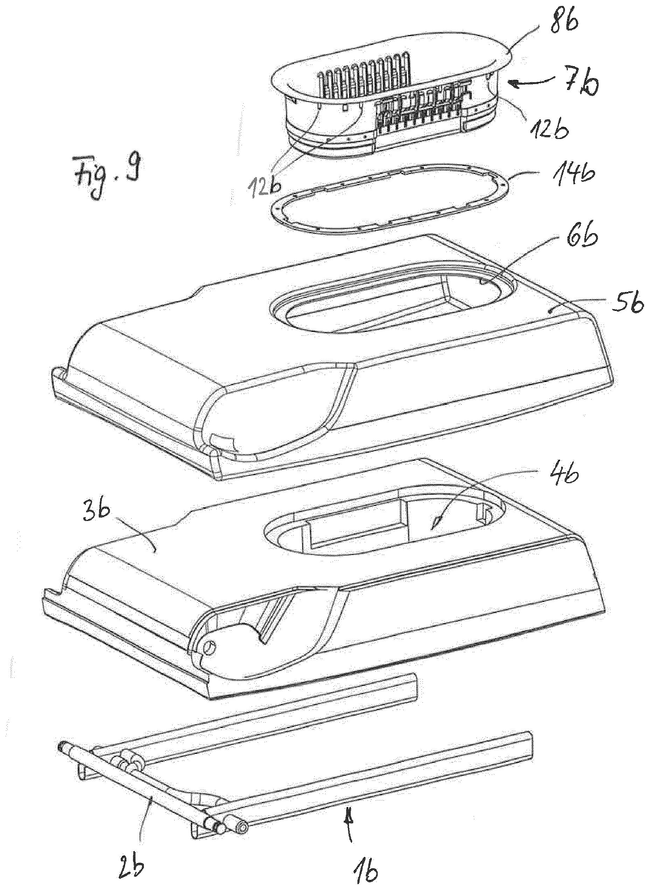

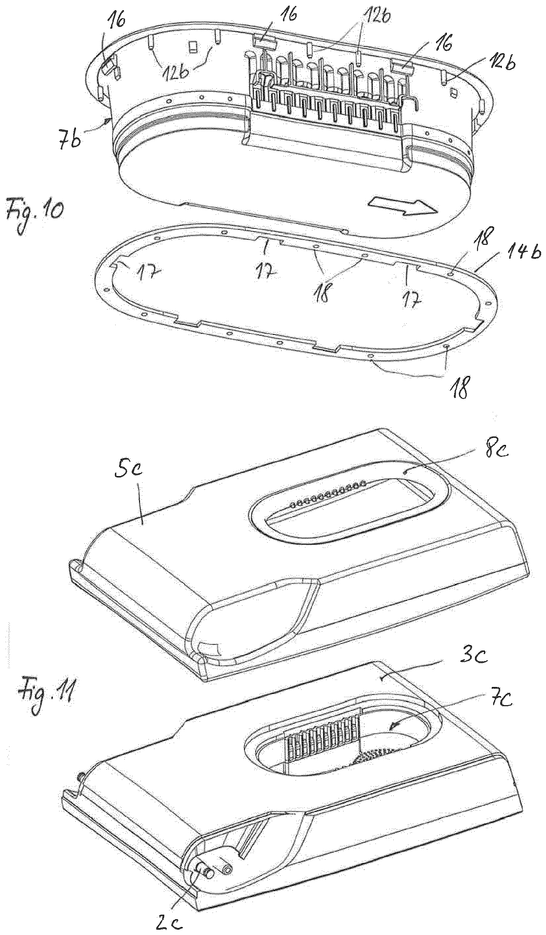

Bei der Ausführungsform nach den Fig. 9 und 10 ist ebenfalls ein ringförmiger Spannrahmen 14b im Bereich einer Ringschulter einer Randkontur der Aufnahme 4b in den Schaumkörper 3b eingeformt und so im Schaumkörper 3b fixiert. Der Spannrahmen 14b weist Rastprofilierungen 17 sowie Steckprofilierungen 18 auf, wobei die Rastprofilierungen 17 als Rastaussparungen und die Steckprofilierungen als kreisförmige Steckdurchtritte gestaltet sind. Die Gehäuseschale 7b weist an ihrer Außenseite unmittelbar unterhalb des Kragens 8b mehrere komplementäre Rastprofilierungen 16 auf, die als Rastnasen gestaltet sind. Zudem weist der Kragen 8b Steckstifte 12b auf, die von einer Unterseite des Kragens 8b nach unten abragen und die als komplementäre Steckprofilierungen zu den Steckdurchtritten des Spannrahmens 14b gestaltet sind.

Zur Fertigstellung der Lehnenanordnung wird der Bezug 5b so auf den Schaumkörper 3b aufgezogen, dass ein umlaufender Randbereich der Aussparung 6b des Bezugs 5b oberhalb des Spannrahmens positioniert ist. Anschließend wird die Gehäuseschale 7b von oben her in die Aufnahme 4b eingesetzt, wodurch zwangsläufig die Steckstifte 12b im Bereich der Unterseite des Kragens 8b den Randbereich des Bezugs 5b durchdringen und den Randbereich des Bezugs 5b gegen den Spannrahmen 14b drücken. Der Randbereich des Bezugs 5b ist demzufolge zum einen zwischen dem Spannrahmen 14b und dem Kragen 8b eingeklemmt. Zum anderen ist der Randbereich durch die Steckstifte 12b, die den Randbereich durchdringen und in die Steckprofilierungen 18 des Spannrahmens 14b eintauchen sowie anschließend in den Schaumkörper eindringen, ergänzend auch formschlüssig relativ zum Spannrahmen 14b und damit relativ zum Schaumkörper 3b fixiert.

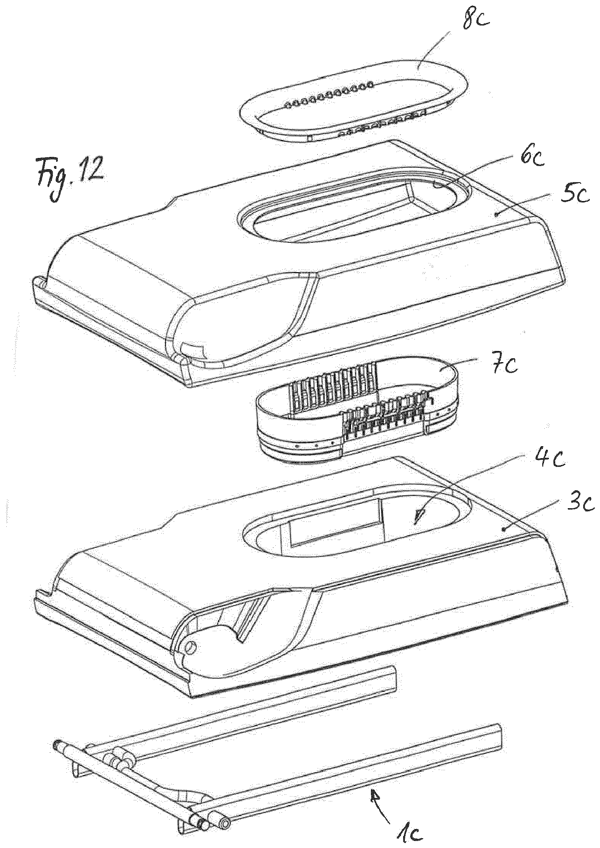

Bei der Ausführungsform nach den Fig. 11 und 12 ist die Gehäuseschale der Lehnenanordnung in ein den Kragen 8c aufweisendes Gehäuseoberteil und in ein wannenförmiges Gehäuseunterteil unterteilt. Zur Montage der Lehnenanordnung wird das Gehäuseunterteil 7c in die Aufnahme 4c eingesetzt und dort stoffschlüssig oder kraftschlüssig fixiert. Das Gehäuseoberteil mit dem Kragen 8c wird mit dem Randbereich der Aussparung 6c des Bezugs 5c verklebt, wobei der Kragen 8c auf einer Oberseite des Randbereichs der Aussparung 6c aufliegt. Anschließend wird der Bezug 5c auf den Schaumkörper 3c aufgezogen, wodurch zwangsläufig das Gehäuseoberteil mit dem Kragen 8c fluchtend und unmittelbar oberhalb eines oberen Randes des Gehäuseunterteils 7c positioniert ist. Ein unterer Rand des Gehäuseoberteils mit dem Kragen 8c und der obere Rand des Gehäuseunterteils 7c liegen auf Stoß umlaufend aneinander an. Die entsprechenden Kontaktflächen werden mit einer Klebstoffschicht versehen, wodurch das Gehäuseoberteil und das Gehäuseunterteil miteinander verklebt und demzufolge gegeneinander fixiert werden.

## Patentansprüche

1. Schwenkbare Lehnenanordnung für einen Fahrzeuginnenraum mit einem Lehnenkörper, der einen Bezug (5, 5a bis 5c) sowie eine Aufnahme (4, 4a bis 4c) für eine Gehäuseschale (7, 7a bis 7c) aufweist, die zur Halterung wenigstens eines Trinkbehältnisses ausgestaltet ist, wobei die Gehäuseschale (7, 7a bis 7c) einen umlaufenden Kragen (8, 8a bis 8c) aufweist, **dadurch gekennzeichnet, dass** der Kragen (8, 8a bis 8c) in montiertem Zustand den Bezug (5, 5a bis 5c) im Bereich eines Randes der Aufnahme (4, 4a bis 4c) überdeckt, und dass der Kragen (8, 8a bis 8c) form-, stoff- oder kraftschlüssig mit dem Bezug (5, 5a bis 5c) verbunden ist.

2. Schwenkbare Lehnenanordnung nach Anspruch 1, **dadurch gekennzeichnet, dass** der Lehnenkörper als Schaumkörper (3, 3a bis 3c) gestaltet ist.

3. Schwenkbare Lehnenanordnung nach Anspruch 1 oder 2, **dadurch gekennzeichnet, dass** ein Tragrahmen (1, 1a bis 1c) vorgesehen ist, den der Lehnenkörper umgibt, und dem eine Schwenklagerung zugeordnet ist, die mit fahrzeugseitigen Schwenkaufnahmen verbindbar ist.

4. Schwenkbare Lehnenanordnung nach einem der vorhergehenden Ansprüche, **dadurch gekennzeichnet, dass** an einer Außenseite der Gehäuseschale (7) wenigstens eine Rastklammer (13) einstückig angeformt ist, die mit einem Gegenabschnitt des Tragrahmens (1) formschlüssig verbindbar ist.

5. Schwenkbare Lehnenanordnung nach einem der vorhergehenden Ansprüche, **dadurch gekennzeichnet, dass** der Kragen (8, 8b) im Bereich seiner Unterseite mit nach unten abragenden Steckstiften (12, 12b) versehen ist, die den Bezug (5, 5b) im Bereich des Randes der Aufnahme (4, 4b) durchdringen, und die formschlüssig in den Schaumkörper 83, 3b) eintauchen.

6. Schwenkbare Lehnenanordnung nach Anspruch 5, **dadurch gekennzeichnet, dass** die Steckstifte (12, 12b) einstückig an dem Kragen angeformt sind.

7. Schwenkbare Lehnenanordnung nach einem der vorhergehenden Ansprüche, **dadurch gekennzeichnet, dass** der Schaumkörper (3a, 3b) im Bereich des Randes der Aufnahme (4a, 4b) mit einem in dem Schaumkörper (3a, 3b) gehaltenen, umlaufenden Spannrahmen (14, 14b) versehen ist, der von dem Bezug (5a, 5b) überdeckt ist, und dass der Kragen (8a, 8b) der Gehäuseschale (7a, 7b) mit dem Spannrahmen (14, 14b) verbunden ist und den Bezug (5a, 5b) im Bereich des Randes der Aufnahme (4a, 4b) überdeckt, und dass insbesondere der Bezug (5a, 5b) zwischen dem Kragen (8a, 8b) und dem Spannrahmen (14, 14b) eingeklemmt ist.

8. Schwenkbare Lehnenanordnung nach Anspruch 7, **dadurch gekennzeichnet, dass** der Spannrahmen (14b) Durchtritte für Steckstifte (12b) des Kragens (8b) aufweist, und dass die Steckstifte (12b) den zwischen dem Spannrahmen (14b) und dem Kragen (8b) befindlichen Bezug (5b) durchdringen.

9. Schwenkbare Lehnenanordnung nach Anspruch 7, **dadurch gekennzeichnet, dass** der Spannrahmen (14) mit Montagekrallen (15) versehen ist, die jeweils mittels eines Filmscharniers an dem Spannrahmen (14) einstückig angeformt und zwischen einer von dem Spannrahmen (14) zu einer Mitte hin abragenden Ausgangsstellung und einer in eine Wandung der Aufnahme (4a) des Schaumkörpers (3a) verkrallten Funktionsstellung schwenkbar angeordnet sind.

10. Schwenkbare Lehnenanordnung nach einem der Ansprüche 7 bis 9, **dadurch gekennzeichnet, dass** die Gehäuseschale (7a, 7b) mit Rast- und/oder Steckprofilierungen (16, 12b) versehen ist, die mit komplementären Rast- und/oder Steckprofilierungen der Montagekrallen (15) und/oder des Spannrahmens (14b) zusammenwirken, um die Gehäuseschale (7a, 7b) in ihrem in die Aufnahme (4a, 4b) des Schaumkörpers (3a, 3b) eingesetzten Zustand zu fixieren.

11. Schwenkbare Lehnenanordnung nach einem der vorhergehenden Ansprüche, **dadurch gekennzeichnet, dass** die Gehäuseschale in ein den Kragen (8c) aufweisendes Gehäuseoberteil und ein Gehäuseunterteil (7c) unterteilt ist, wobei das Gehäuseunterteil (7c) in den Schaumkörper (3c) eingebettet ist und das Gehäuseoberteil mit dem Bezug (5c) verbunden ist, in dem der Kragen (8c) umlaufend mit einem Rand des Bezugs (5c) im Bereich einer Aussparung (6c) für die Aufnahme (4c) verbunden ist, und dass insbesondere das Gehäuseoberteil und das Gehäuseunterteil insbesondere durch Verklebung stoffschlüssig miteinander verbunden sind.

12. Verfahren zum Herstellen einer schwenkbaren Lehnenanordnung nach einem der vorhergehenden Ansprüche, wobei ein Schaumkörper (3, 3a bis 3c) mit einer Aufnahme (4, 4a bis 4c) für eine Gehäuseschale (7, 7a bis 7c) versehen wird, und wobei der Schaumkörper (3, 3a bis 3c) mit einem Bezug (5, 5a bis 5c) versehen wird, **dadurch gekennzeichnet, dass** ein Kragen (8, 8a bis 8c) der Gehäuseschale (7, 7a bis 7c) mit dem Bezug (5, 5a bis 5c) in einem Randbereich der Aufnahme (4, 4a bis 4c) verbunden wird, und dass insbesondere an dem Kragen (8, 8b) Steckstifte (12, 12b) angeformt werden, die bei einem Einsetzen der Gehäuseschale (7, 7b) in die Aufnahme den Bezug (5, 5b) durchdringen und in den Schaumkörper (3, 3b) eintauchen.

13. Verfahren nach Anspruch 12, **dadurch gekennzeichnet, dass** im Bereich der Aufnahme (4a, 4b) in den Schaumkörper (3a, 3b) ein Spannrahmen (14, 14b) eingeformt wird, und dass der Kragen (8a, 8b) der Gehäuseschale (7a, 7b) bei einem Einsetzen der Gehäuseschale (7a, 7b) in die Aufnahme (4a, 4b) mit dem Spannrahmen (14, 14b) verbunden wird unter Zwischenfügung eines umlaufenden Randes einer Aussparung (6a, 6b) des Bezugs (5a, 5b).

14. Verfahren nach Anspruch 13, **dadurch gekennzeichnet, dass** an dem Spannrahmen (14) Montagekrallen (15) angeformt werden, die in einem Ausgangszustand frei zu einer Mitte der Aufnahme (4a) hin abragen, und die bei einem Einsetzen der Gehäuseschale (7a) in die Aufnahme (4a) nach unten und nach außen gedrückt werden, wodurch die Montagekrallen (15) in Wandungen der Aufnahme (4a) des Schaumkörpers (3a) eindringen, und dass insbesondere die Gehäuseschale (7a) außenseitig mit den Montagekrallen (15) und/oder dem Spannrahmen (14) verrastet, sobald die Gehäuseschale (7a) ihre in die Aufnahme (4a) eingesetzte Funktionsstellung erreicht hat.

15. Verfahren nach Anspruch 12, **dadurch gekennzeichnet, dass** die Gehäuseschale als zwei separate Bauteile in Form eines den Kragen (8c) aufweisenden Gehäuseoberteils und in Form eines wannenförmigen Gehäuseunterteils (7c) hergestellt wird, dass anschließend das Gehäuseunterteil (7c) in die Aufnahme (4c) des Schaumkörpers (3c) eingebettet wird, dass das Gehäuseoberteil mit dem Bezug (5c) verbunden wird, und dass der Bezug auf den Schaumkörper (3c) aufgebracht wird, wobei das Gehäuseoberteil im Bereich der Aufnahme (4c) mit einem oberen Rand des Gehäuseunterteils (7c) verbunden, insbesondere verklebt wird.
